# EUROPEAN PATENT APPLICATION

(11) **EP 0 457 077 A2**
(43) Date of publication of application: **21.11.1991**
(21) Application number: 91106718.9
(22) Date of filing: 25.04.1991
(51) Int. Cl.: H04M 3/50, G06F 3/023

(54) **Accessing alphanumeric information using a numeric keypad**

(30) Priority: 16.05.1990 US 525365
(71) Applicant: Siemens Rolm Communications Inc. (a Delaware corp.), Santa Clara, CA 95052 (US)
(72) Inventor: Rust, Tracy, Austin, TX 78753 (US); Arledge, Cathy, Austin, TX 78731 (US); Ford, Gordon, Round Rock, TX 78681 (US); James, Nigel, 804 Austin, TX 78754 (US)
(74) Representative: Fuchs, Franz-Josef, Dr.-Ing.

(57) **Abstract**

Method and apparatus for accessing alphanumeric data, such as a person's first name, last name, and telephone number, from a database using information provided by keypads and, in particular, from numeric keypads (110), which information relates to characters from the person's first name and/or characters from the person's last name. Specifically, the inventive apparatus includes: (a) function keypads (115) which identify the input as to last name or first name; (b) numeric keypads (110) for receiving input related to either the first name or the last name; (c) means for grouping input information which relates to the first name and to the last name; (d) means for searching the database by means of the portions of the first and last name and identifying the part of the database which matches the portions thereof; and (e) means for displaying (120) the identified part of the database.

## Description

### Technical field of the Invention

The present invention pertains to method and apparatus for accessing alphanumeric data from a database and, in particular, to method and apparatus for accessing alphanumeric data from a database using information provided by keypads. Further, in particular, the present invention pertains to method and apparatus for accessing alphanumeric data from a database using information provided by numeric keypads such as, for example and without limitation, numeric keypads associated with a telephone set.

### Background of the Invention

There is a need, which is well known in industry, to establish central databases of information and to provide that information to users in a quick and efficient manner. As a result, at present, many corporate databases and corporate directories reside on host computers. Further, there is an additional need which is also well known need in industry to be able to access and retrieve information from such databases from a telephone set.

In responding to this need, several methods ("prior art methods") have been developed to permit a user to access and retrieve alphanumeric information from a database using numeric pads which are typically provided with a telephone set. One such prior art method is utilized in a system developed by ROLM Systems, which system is referred to as the ROLM Systems PhoneMail system. The ROLM Systems PhoneMail system requires a user to utilize numeric keypads associated with a telephone set to input a single string of digits which relate to the characters of the last name and the first name. This aspect of the ROLM Systems PhoneMail system suffers from several drawbacks. Specifically, the ROLM Systems PhoneMail system does not provide the capability of searching the database by last name alone, by first name alone, or by a combination of some, and not all, of the characters from the last name and first name.

Another such prior art method requires a user to depress numeric keypads associated with a telephone set a predetermined number of times to reference a particular alphabetic character. This method is used because each numeric keypad on a typical telephone set relates to a multiplicity of alphabetic characters. For example, to enter FORD using numeric keypads on a typical telephone set: "F" is entered by pressing the "3" keypad three (3) times; "O" is entered by pressing the "6" keypad three (3) times; "R" is entered by pressing the "7" keypad two (2) times; and "D" is entered by pressing the "3" keypad one (1) time.

Still another such prior art method requires a user to utilize numeric keypads associated with a telephone set to enter a numeric code which is an access key for a name in the database. Then, in accordance with this prior art method, the user may retrieve a telephone number from the database which is associated with that name.

All of the above-described methods suffer from two basic drawbacks. First, a user may not know how to spell the full name of a person and, as a result, the user will be unable to access a database. Second, the prior art methods described above often require the user to utilize a large number of keypad strokes to retrieve data from the database.

As a result of the above, there is a need for method and apparatus for accessing alphanumeric data, such as, for example, a person's first name, last name, and telephone number, from a database using information provided by keypads and, in particular, by numeric keypads, which information relates to characters from the person's first name and/or characters from the person's last name.

### Summary of the Invention

Embodiments of the present invention advantageously satisfy the above-identified need in the art and provide method and apparatus for accessing alphanumeric data, such as, for example, a person's first name, last name, and telephone number, from a database using information provided by keypads and, in particular, by numeric keypads, which information relates to characters from the person's first name and/or characters from the person's last name.

Embodiments of the present invention enable a user to access a database by first name, by last name, or by some combination of a portion of first name and last name using information obtained from numeric keypads. In addition, embodiments of the present invention enable the user to change between the access search modes at any time during the access search process. Embodiments of the present invention are advantageous because they enable the access process to narrow the possible database matches more quickly than occurs with prior art methods and they also enables the user to access database entries corresponding to names of persons the user may not know how to spell. Lastly, a scroll access search mode is available to a user at any time during the access search process, which scroll access search mode enables the user, after having accessed a particular entry in the database, to scroll through and display related entries.

In general, an embodiment of the present invention is apparatus for searching a database having an access key which is comprised of a multiplicity of data fields, which apparatus comprises: (a) function keypad means, responsive to input from a user, for providing first information to identify the data fields to which second information which is input by the user is associated; (b) data input keypad means, responsive to input from the user, for providing second information which is associated with the data fields identified by the first information; (c) means for grouping second information which is associated with each of the multiplicity of data fields into input portions thereof; (d) means for searching the database and identifying the part of the database which matches the input portions of the multiplicity of data fields; and (e) means for displaying the identified part of the database. In addition, in further embodiments, the means for displaying the identified part of the database comprises further function keypad means, responsive to input from the user, for providing third information to signal whether to display a first predetermined section of the identified part of the database or to display a second predetermined section of the identified part of the database.

### Brief Description of the Drawing

A complete understanding of the present invention may be gained by considering the following detailed description in conjunction with the accompanying drawing, in which:
FIG. 1 is a block diagram of an embodiment of the present invention; and
FIGs. 2A-2F comprise a flowchart of software which is used to fabricate a preferred embodiment of the present invention.

### Detailed Description

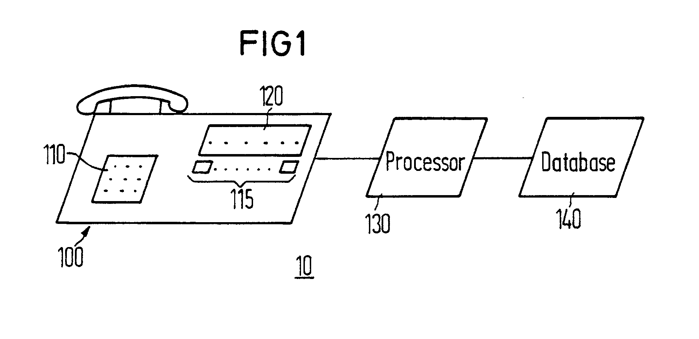

FIG. 1 is an block diagram of embodiment 10 of the present invention. As shown in FIG. 1, telephone 100 is comprised of numeric keypads 110, function keypads 115, and display 120. Telephone 100 is connected to processor 130 and processor 130 is connected, in turn, to database system 140. Telephone 100 is fabricated in accordance with methods well known to those of ordinary skill in the art and may be a telephone which is commercially available such as, for example, a ROLMPhone 244/PC which is manufactured by ROLM Systems of Austin, Texas. In the embodiment shown in FIG. 1, display 120 is comprised of a two-line LCD display, however, the present invention is not limited to two-line displays and display 120 may comprise any number of lines.

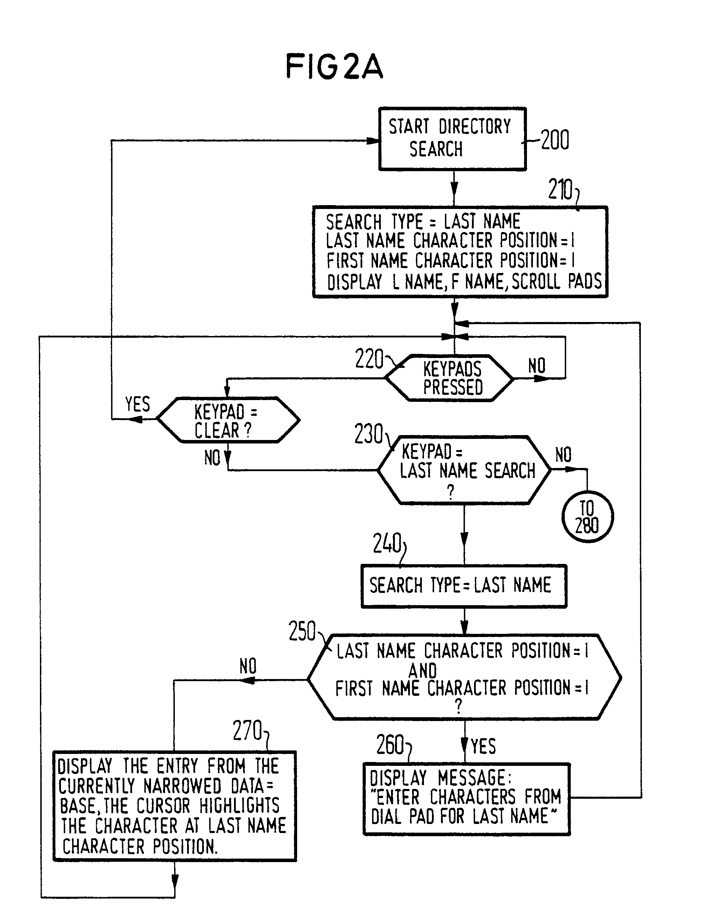

Telephone 100 sends signals to processor 130, which signals identify keypad strokes and processor 130 sends signals to telephone 100, which signals produce character displays on display 120. In a preferred embodiment of the present invention, processor 130 is an IBM PS/2 personal computer which is available from International Business Machines Corp. but processor 130 may be any type of processor which can carry out the steps indicated in the flowchart of FIGs. 2A-2F such as, for example, a microprocessor that may be configured to reside within the physical confines of telephone 100.

Database 140 is a database system which stores a database on, for example, magnetic disk storage. Further, information is accessed from this database and this database is created in a manner which is well known to those of ordinary skill in the art. It should be clear to those of ordinary skill in the art that the present invention is not limited to the use of database which is created and maintained by a processor such as a personal computer and, in other embodiments, database system 140 may reside at a private branch exchange (PBX) such as the CBX 8000 which is available from ROLM Systems. In such an embodiment, the database would be accessed by the processor or portions thereof could be transferred, i.e., downloaded, from the switch to the processor. Still further, in still other embodiments, portions of the database could be downloaded from the switch to a processor-and-storage system which is contained within telephone 100 itself.

Numeric keypads 110 comprise numerical keypads which are well known in the art such as numeric keypads which are associated with a telephone set which are used for dialing telephone numbers.

Lastly, function keypads 115 are keypads which are well known to those of ordinary skill in the art for producing signals which are identified by processor 130 as corresponding to predetermined functions. Those of ordinary skill in the art should understand that the present invention is not limited to the use of a particular number of predetermined function keypads since, under software control, particular keypads may be used to provide several functions during the operation of the apparatus to perform a predetermined function. Further, those of ordinary skill in the art should also understand that the present invention does not require the use of function keypads at all because, instead of using a particular function keypad to invoke a specific function, predetermined combinations of numeric keypad strokes may be interpreted by processor 130 to invoke such specific functions.

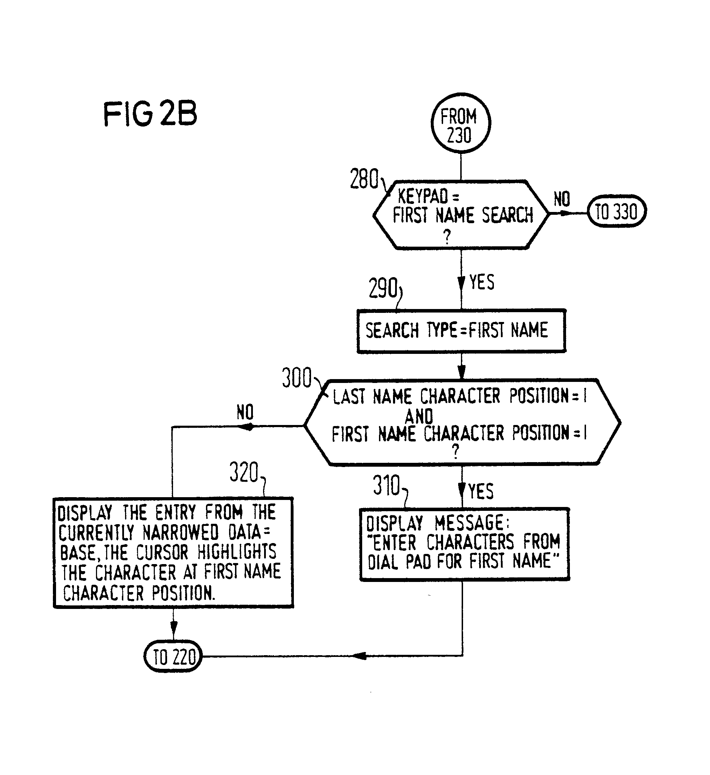

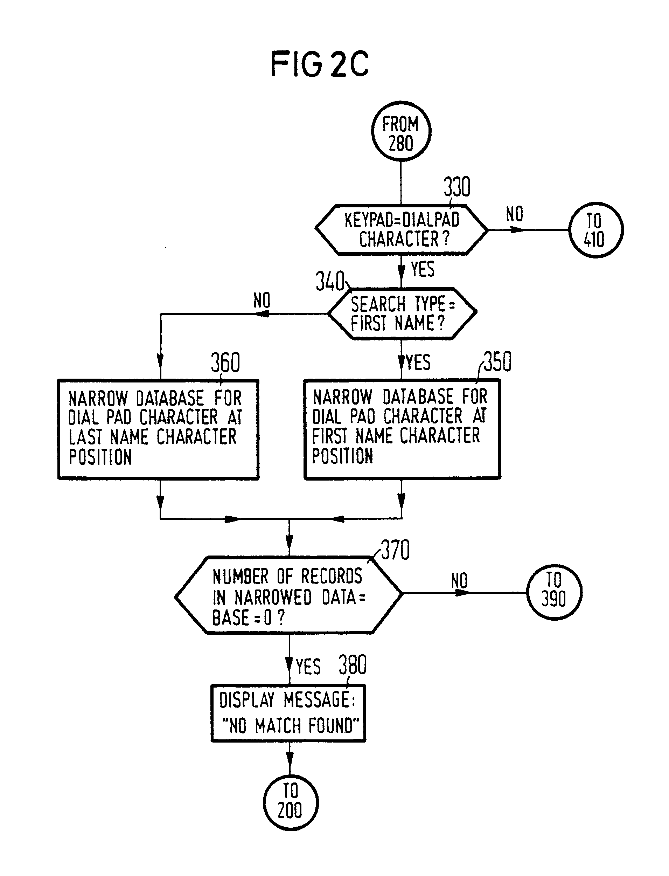

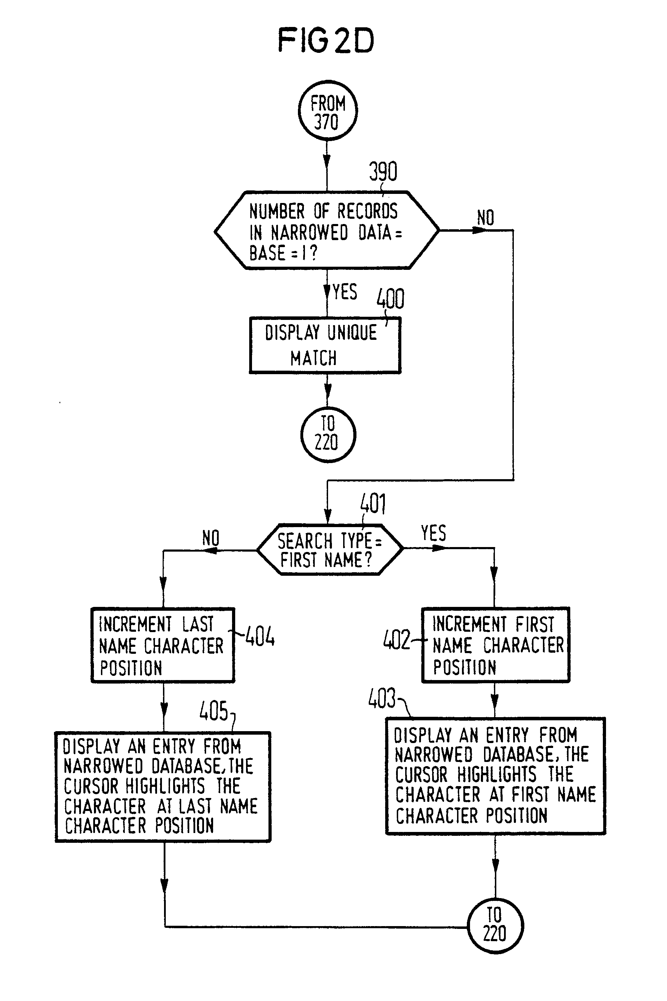

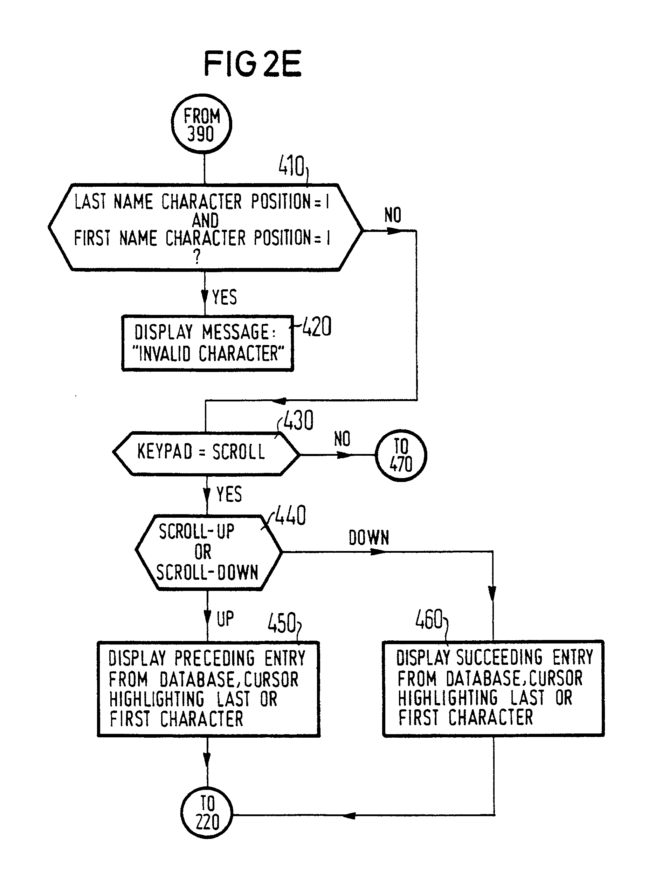

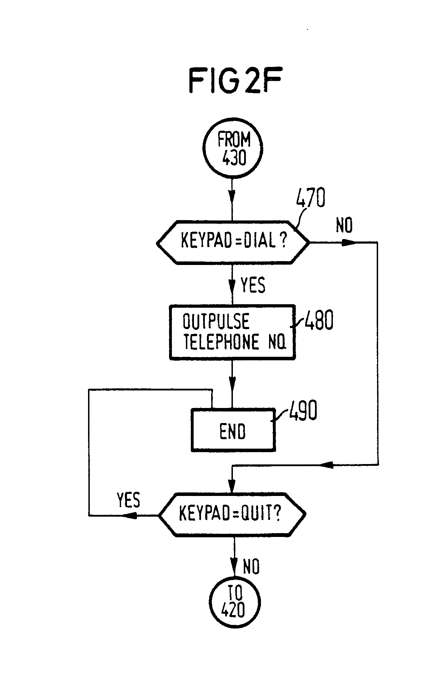

Before describing the operation of embodiment 10 of the present invention shown in FIG. 1 in detail with reference to FIG. 2, we will describe how embodiment 10 operates in general.

Assume that database 140 is, for example, a corporate directory whose data is retrieved by alphanumeric name. If a user wants to place a telephone call to, for example, Clarke Kent, he will press a function keypad denoted, for example, as DIRECTORY to invoke the DIRECTORY search function. As is well known to those of ordinary skill in the art, such function keypads may be specific ones of function keypads 115 which are reserved exclusively for use by the user to invoke specific functions or, in other embodiments, such function keypads may be software settable function keypads or, in still other embodiments, the function keypads may be a combination of reserved and software settable function keypads. In an embodiment wherein a specific function keypad is set by software, processor 130 sends a message to telephone 100 to be displayed on display 120 to indicate the particular function which is presently invoked by a particular one of function keypads 115.

After the user presses the DIRECTORY function keypad, telephone 100 sends a signal to processor 130 which is interpreted to indicate that the user invoked the DIRECTORY function. In response, processor 130 will send a signal to telephone 100 to cause display 120 to display, for example, the following message: "SELECT SEARCH MODE." The user may then have the option of invoking three functions, SCROLL, FIRST NAME SEARCH, or LAST NAME SEARCH. In this embodiment, software settable function keypads are used to interact with the inventive system and, to display these functions, processor 130 sends a message to telephone 130 to cause the function keypad functions to be displayed on display 120 in the vicinity of the specific ones of function keypads 115.

The user may scroll through the list by pressing the SCROLL function keypad. Further, the SCROLL function keypad may be split into portions to permit scrolling forward or backward on the list. Still further, the user may narrow his scroll search by indicating that scroll be between the following ranges of letters: A-G, H-O, or P-Z. As above, this capability is implemented by means of resetting function keypads in accordance with resetting displays, all in accordance with software. Then, for example, if the user selected a function keypad to invoke scrolling in the range of letters H-O, the software may again permit the scroll range to narrow by giving the user a choice of the following ranges: H-I, J-K, and L-O. If the user wants to enter the directory by means of last name, he will press the LAST NAME SEARCH function keypad. Processor 130 will note the request and be ready to interpret the numeric keypad input as relating to last names. The user then uses numeric keypads to enter the last name. For example, for the name Kent, he will press the following numeric keypads: "5" corresponding to the letters JKL, "3" corresponding to the letters DEF, "6" corresponding to the letters MNO, and "8" corresponding to the letters TW. Of course, in accordance with advantageous use of the present invention, the user may only enter the first letter of the last name or the first two letters or the last name, and so forth, instead of entering the entire last name. In addition, at any time, the user may press the FIRST NAME SEARCH function keypad and begin entering all or a portion of the first name.

Now let us describe the information that is displayed to the user as he enters information by depressing the numeric keypads. After the user has depressed the "5" keypad, processor 130 accesses database entries corresponding to last names beginning with J, database entries corresponding to last names beginning with K, and database entries corresponding to last names beginning with L. These entries may be accessed and made accessible in sequence from the first entry for J to the last entry for L in a manner which is well known to those of ordinary skill in the art such as, for example, by means of a linked list. Processor 130 will then cause display 120 to display a database entry, for example, from the middle of this list.

It is important to note that the user may switch to a first name narrowing of the last name search at anytime by pressing the FIRST NAME SEARCH function keypad. After that, processor 130 will narrow the search to first names to find a match. In addition, the user may, at any time, switch back to the last name search and vice versa.

Lastly, when there is a match of the input and a name in database 140, processor 130 will display the full name and telephone number. The user may then depress the DIAL function keypad to cause the system to dial the telephone number.

We will now discuss three simple examples to help illustrate the general discussion set forth above. In example 1, a user wishes to place a call to Mr. King. He presses the DIRECTORY function keypad on his telephone and he then presses the LAST NAME SEARCH function keypad to invoke a last name search. He then presses the following numeric keypads: "5"; "4"; "6"; and "4". Processor 130 searches database 140 and retrieves four matched entries for King. The fact that four entries were found may be indicated on display 120 in one embodiment of the present invention, for example, by a message "KING -4 entries" or, in another embodiment of the present invention display 120 may be flashed four (4) times. At this point, the user has the option of switching to the first name search by depressing the FIRST NAME SEARCH function keypad or to scroll through the four matched entries by depressing the SCROLL down function keypad. Since, in this particular example, the user is unsure of Mr. King's first name, he depresses the SCROLL down function keypad and the following entries are displayed sequentially on display 120:
King, James X2222
King, Kellie X9999
King, Skylar X6666
King, Will X4444

The user recognizes Mr. King's first name as being Skylar and he causes the system to dial Skylar King's telephone number by pressing the DIAL function keypad.

In example 2, a user needs to call Peter Parker but he has misplaced Peter's telephone number. The user presses the DIRECTORY function keypad on his telephone and he then presses the LAST NAME SEARCH function keypad to invoke a last name search. He then presses the following numeric keypads: "7" and "2" to select Pa. The user then decides to switch to the first name search by pressing the FIRST NAME SEARCH keypad and he presses the following keypads: "7" and "3" to select Pe. Processor 130 finds a match in the database for:
Parker, Peter X5555

The user then causes the system to dial this telephone number by pressing the DIAL function keypad.

In example 3, a user wants to call Jackie James. The user presses the DIRECTORY function keypad on his telephone and he then presses the SCROLL function keypad. Processor 130 presents the display 120 with the following ranges: A-G, H-O, and P-Z.

The user selects H-O and processor 130 presents display 120 with further alphabetic ranges: H-I, J-K, and L-O. The user selects the range of J-K and he begins to scroll through the directory listings that begin with J. The telephone system can dial the telephone number indicated by the database entry. We now turn to describe the manner in which system 10 operates in detail with reference to the flowchart shown in FIG. 2. Specifically, as shown at FIG. 2, at box 200, the program in processor 130 initializes the directory search. In particular, the program causes a message to be displayed on display 120 in the vicinity of a function keypad that indicates that the keypad provides a directory search function. Then control is transferred to box 210.

At box 210, control variables for the program are initialized. In particular, SEARCH TYPE is set equal to LAST NAME, LAST NAME CHARACTER ENTRY POSITION = 1 to indicate that the system is ready for the first character in the last name to be entered, and FIRST NAME CHARACTER ENTRY POSITION = 1 to indicate that the system is ready for the first character in the first name to be entered. Finally, processor 130 sends a signal to display 120 to cause the function keypads LAST NAME SEARCH, FIRST NAME SEARCH, and SCROLL to be displayed. Then, control is passed to decision box 220.

At decision box 220, the program determines whether a keypad has been pressed. If a keypad has not been pressed, the program just loops back to decision box 220. However, if a keypad was pressed, control is transferred to decision box 225.

At decision box 225, the program determines whether the pressed keypad was the CLEAR function keypad. If it was, then control is transferred to box 200 to restart the directory search, otherwise, control is transferred to decision box 230.

At decision box 230, the program determines whether the pressed keypad was the LAST NAME SEARCH function keypad. If it was, then control is transferred to box 240, otherwise, control is transferred to decision box 280.

At box 240, the program sets the variable SEARCH TYPE equal to LAST NAME and control is transferred to decision box 250.

At decision box 250, the program determines whether the LAST NAME CHARACTER POSITION = 1 and the FIRST NAME CHARACTER POSITION = 1. If so, then control is transferred to box 260, otherwise, control is transferred to box 270.

At box 260, processor 130 sends a message to display 120 to display the following message: "ENTER CHARACTERS FROM THE DIAL PAD FOR THE LAST NAME." Then, control is transferred to decision box 220 to await the next keypad entry.

At box 270, processor 130 displays an entry from the currently narrowed database and the cursor is set to highlight the character at the LAST NAME CHARACTER POSITION. Then, control is transferred to decision box 220 to await the next keypad entry.

At decision box 280, the program determines whether the pressed keypad was the FIRST NAME SEARCH function keypad. If it was, then control is passed to box 290, otherwise, control is passed to decision box 330.

At box 290, the program sets the variable SEARCH TYPE equal to FIRST NAME and control is transferred to decision box 300.

At decision box 300, the program determines whether the LAST NAME CHARACTER POSITION = 1 and the FIRST NAME CHARACTER POSITION = 1. If so, then control is transferred to box 310, otherwise, control is transferred to box 320.

At box 310, processor 130 sends a message to display 120 to display the following message: "ENTER CHARACTERS FROM THE DIAL PAD FOR THE FIRST NAME." Then, control is transferred to decision box 220 to await the next keypad entry.

At box 320, processor 130 displays an entry from the currently narrowed database and the cursor is set to highlight the character at the FIRST NAME CHARACTER POSITION. Then, control is transferred to decision box 220 to await the next keypad entry.

At decision box 330, the program determines whether the pressed keypad was a numeric keypad which is typically used for dialing. If it was, then control is transferred to decision box 340, otherwise, control is transferred to decision box 410.

At decision box 340, the program determines whether SEARCH TYPE equals FIRST NAME. If it is, control is transferred to box 350, otherwise, control is transferred to box 360.

At box 350, the program narrows the database by eliminating entries which do not match the possibilities for first name indicated by the latest numeric keypad entry. Then, control is transferred to decision box 370.

At box 360, the program narrows the database by eliminating entries which do not match the possibilities of last name indicated by the latest numeric keypad entry. Then, control is transferred to decision box 370.

At decision box 370, the program determines whether the number of records in the narrowed database equals 0. If it does, control is transferred to box 380, otherwise, control is transferred to decision box 390.

At box 380, processor 130 sends a message to display 120 to display the following message: "NO MATCH FOUND." Then, control is transferred to box 200 to start the directory function again.

At decision box 390, the program determines whether the number of records in the narrowed database equals 1. If it does, control is transferred to box 400, otherwise, control is transferred to decision box 401.

At box 400, processor 130 sends a message to display 120 to display the record corresponding to the unique match. Then, control is transferred to decision box 220 to await the next keypad entry.

At decision box 401, the program determines whether the variable SEARCH TYPE equals FIRST NAME. If it does, control is transferred to box 402, otherwise, control is transferred to box 404.

At box 402, the program increments the FIRST NAME CHARACTER POSITION and control is transferred to box 403.

At box 403, processor 130 displays an entry from the currently narrowed database and the cursor is set to highlight the character at the FIRST NAME CHARACTER POSITION. Then, control is transferred to decision box 220 to await the next keypad entry.

At box 404, the program increments the LAST NAME CHARACTER POSITION and control is transferred to box 405.

At box 405, processor 130 displays an entry from the currently narrowed database and the cursor is set to highlight the character at the LAST NAME CHARACTER POSITION. Then, control is transferred to decision box 220 to await the next keypad entry.

At decision box 410, the program determines whether the LAST NAME CHARACTER POSITION = 1 and the FIRST NAME CHARACTER POSITION = 1. If so, then control is transferred to box 420, otherwise, control is transferred to decision box 420.

At box 420, processor 130 sends a message to display 120 to display the following message: "INVALID CHARACTER." Then, control is transferred to decision box 220 to await the next keypad entry.

At decision box 430, the program determines whether the pressed keypad was a SCROLL function keypad. If it was, then control is transferred to decision box 440, otherwise, control is transferred to decision box 470.

At decision box 440, the program determines whether the SCROLL function keypad referred to a scroll-up or a scroll-down function. If the function keypad referred to a scroll-up, then control is transferred to box 450, otherwise, control is transferred to box 460.

At box 450, processor 130 displays the preceding entry from the currently narrowed database and the cursor is set to highlight the character at the LAST or FIRST NAME CHARACTER POSITION, depending on whether SEARCH TYPE equals LAST or FIRST NAME. Then, control is transferred to decision box 220 to await the next keypad entry.

At box 460, processor 130 displays the succeeding entry from the currently narrowed database and the cursor is set to highlight the character at the LAST or FIRST NAME CHARACTER POSITION, depending on whether SEARCH TYPE equals LAST or FIRST NAME. Then, control is transferred to decision box 220 to await the next keypad entry.

At decision box 470, the program determines whether the pressed keypad was the DIAL function keypad. If it was, then control is transferred to box 480, otherwise, control is transferred to decision box 500.

At box 480, the program retrieves the telephone number from the database entry and transmits it to the telephone with a command to cause the telephone number to place a call to that telephone number. Then, control is transferred to box 490 to end the directory search function.

At decision box 500, the program determines whether the pressed keypad was the QUIT function keypad. If it was, control is transferred to box 490 to end the directory search function, otherwise, control is transferred to box 420.

The following describes the method by which database entries are obtained from the database in response to input received from a numeric keypad. As one can readily appreciate, in embodiments where the input numerical keypads each refer to a possible three letters, the system must use a method for choosing the database entries which are possibilities that the user desires to retrieve. This can best be understood by considering the following simple example. Assume that the user wishes to retrieve the name RUST from a database. To do so using a typical telephone keypad, the user would press the following keys in turn: "7" corresponding to letters PRS, "8" corresponding to letters TUV, "7" corresponding to letters PRS, and "8" corresponding to TUV. In accordance with the embodiment of the present invention described above, the preferred embodiment includes the further requirement wherein the program which does the retrieval first uses the middle letter in the range of possibilities for a keypad stroke to look for possible database entry matches. Thus, in this example, after the first keypad stroke, the program accesses and maintains a linked list of last names beginning with R, P and S. Then, after the second keypad stroke is entered, the program eliminates: (a) from the list beginning with R, all those except ones starting with RU, RT or RV; (b) from the list ,beginning With P, all those except ones beginning with PU, PT or PV; and (c) from the list beginning with S, all those except ones beginning with SU, ST or SY. As one can readily appreciate, this process alone should eliminate a substantial number of database entries. Then, after the third keypad is entered, the program eliminates: (a) from the list beginning with R, all those except ones starting with RUR, RUP, RUS, RTR, RTP, RTS, RVR, RVP or RVS; (b) from the list beginning with P, all those except ones starting with PUR, PUP, PUS, PTR, PTP, PTS, PVR, PVP or PVS; and (c) from the list beginning with S, all those except ones starting with SUR, SUP, SUS, STR, STP, STS, SVR, SVP or SVS. Then, this is followed in similar manner by the next keypad entry.

Of course, the user may cause a switch to a first name search or to a scroll search at any time to enhance the efficiency of the above-described retrieval process.

Further, those skilled in the art recognize that further embodiments of the present invention may be made without departing from its teachings. For example, embodiments of the present invention may operate even more efficiently in terms of database retrieval where the keypad entries are made into a keypad set which is comprised of sets of keypads which are reserved for alphabetic entry. In addition, a specific embodiment of the present invention searches for the letter "Q" when the "7" key is pressed and the letter "Z" when the "9" key is pressed. In such an embodiment the "7" corresponds to PQRS and the "9" corresponds to WXYZ.

## Claims

1. Apparatus for searching a database in response to input, the database having an access key which is comprised of a multiplicity of data fields, which apparatus comprises:
function keypad means, responsive to input, for providing first information to identify the data fields to which second information which is input is associated;
data input keypad means, responsive to input, for providing the second information which is associated with the data fields identified by the first information;
means for grouping second information which is associated with the multiplicity of data fields into input portions thereof;
means for searching the database and identifying the part of the database which matches the input portions of the multiplicity of data fields; and
means for displaying the identified part of the database.

2. The apparatus of claim 1 wherein the means for displaying the identified part of the database comprises:
further function keypad means, responsive to input, for providing third information to signal whether to display a first predetermined section of the identified part of the database or to display a second predetermined section of the identified part of the database.

3. The apparatus of claim 2 wherein the function keypad means are function keypads on a telephone set.

4. The apparatus of claim 3 wherein the function keypads are function keys whose functions may be varied.

5. The apparatus of claim 2 wherein the data input keypad means comprise alphabetic keypad means.

6. The apparatus of claim 2 wherein the data input keypad means comprise numeric keypad means.

7. The apparatus of claim 6 wherein the function keypad means comprise a first name function keypad for providing information which identifies a first name data field and a last name function keypad for providing information which identifies to a last name data field.

8. The apparatus of claim 7 wherein the display means comprises a display on a telephone set.

9. The apparatus of claim 7 wherein the further function keypad means comprises a scroll-up function keypad and a scroll-down function keypad.

10. The apparatus of claim 8 which further comprises a still further function keypad means, responsive to input, for providing forth information to cause the apparatus to retrieve a telephone number which is stored in the database for at least one of the displayed parts thereof and to cause the apparatus to dial the telephone number.

11. Method for searching a database in response to input, the database having an access key which is comprised of a multiplicity of data fields, which method comprises the steps of:
receiving input which identifies the data fields to which information which is input is associated;
receiving information which is associated with the identified data fields;
grouping input information which is associated with the multiplicity of data fields into input portions thereof;
searching the database and identifying the part of the database which matches the input portions of the multiplicity of data fields; and
displaying the identified part of the database.

12. the method of claim 11 which further comprises the step of: receiving input which signals whether to display a first predetermined section of the identified part of the database or to display a second predetermined section of the identified part of the database.
